# EUROPÄISCHE PATENTSCHRIFT

(11) **EP 1 981 605 B1**
(45) Veröffentlichungstag und Bekanntmachung des Hinweises auf die Patenterteilung: **18.11.2009**
(21) Anmeldenummer: 07703246.4
(22) Anmeldetag: 03.02.2007
(51) Int. Cl.: B01D 1/28, B01D 5/00, B01D 17/02, C02F 1/04

(54) **VORRICHTUNG ZUR AUFBEREITUNG VON PROZESS- ODER INDUSTRIEABWÄSSERN**
APPARATUS FOR PROCESSING PROCESS OR INDUSTRIAL WASTEWATERS
DISPOSITIF POUR LE CONDITIONNEMENT D'EAUX RESIDUAIRES INDUSTRIELLES OU ISSUES D'UN PROCEDE

(30) Priorität: 11.02.2006 DE 102006006324
(43) Veröffentlichungstag der Anmeldung: 22.10.2008
(73) Patentinhaber: H2O GmbH, 79585 Steinen (DE)
(72) Erfinder: FICKENSCHER, Matthias, 79541 Lörrach (DE); LADENBERGER, Daniel, 79689 Maulburg (DE)
(74) Vertreter: Maucher, Wolfgang
(86) Internationale Anmeldenummer: PCT/EP2007/000935
(87) Internationale Veröffentlichungsnummer: WO 2007/090583

(56) Entgegenhaltungen:
- WO-A-92/03203
- GB-A- 382 891
- GB-A- 828 664
- GB-A- 935 178
- GB-A- 2 126 116
- US-A- 533 424
- US-A- 2 487 884

## Beschreibung

Die vorliegende Erfindung betrifft eine Vorrichtung zur Aufbereitung von Prozess- oder Industrieabwässern mit einem Verdampfer, der passend ausgeführt ist, um mit Dampf, welcher im Betrieb auf der Heizseite kondensiert, betrieben werden zu können, und somit auch als Kondensator wirkt, und in dem ein Rohrbündel-Wärmetauscher vorgesehen ist, dessen Kondensat-Seite mit einem Trennapparat zum Trennen des Destillats von aufschwimmender organischer Phase oder dergleichen freien Flüssigkeitsbestandteilen verbunden ist.

In den verschiedensten Verfahren fallen Prozessabwässer an, bei denen im Wasser oder einer anderen Flüssigkeit Öle, Lösungsmittel oder andere Prozessrückstände enthalten sind. Um diese Prozessabwässer entweder dem Prozesskreislauf erneut zuführen oder in die Kanalisation einleiten zu können, ist die Reinigung dieser Prozessabwässer erforderlich. Dabei sind insbesondere beim Einleiten in die Kanalisation bestimmte, teils auch gesetzlich vorgegebene Grenzwerte einzuhalten.

Um den Reinigungsgrad vorbekannter Destillationsverfahren zu erhöhen, können mehrere Reinigungsstufen aneinander gereiht werden, jedoch steigt damit der apparative Aufwand und der Platzbedarf erheblich. Generell lässt sich sagen, dass der mit der Reinigung von Prozessabwässern verbundene Kostenaufwand überproportional steigt, je höher der angestrebte Reinigungsgrad ist.

Die vorliegende Erfindung geht nun von einem einstufigen Destillationsverfahren aus, das einen geschlossenen Energiekreislauf zur Reduzierung des Energieeintrages hat. Man kennt bereits derartige Aufbereitungsvorrichtungen, die einen Verdampfer aufweisen, der durch einen Rohrbündel-Wärmetauscher gebildet ist. Da jedes Destillat auch weiterhin noch einen mehr oder weniger geringen Anteil an flüchtigen ölen aufweist, wobei hier Öl nur beispielhaft auch für andere flüchtige polare und unpolare Kohlenwasserstoffe genannt wird, sehen vorbekannte Aufbereitungsvorrichtungen Koaleszenzorgane vor, die Steinwolle oder ein Edelstahlgestrick aufweisen können, um beispielsweise den Ölanteil bei der Abwasserreinigung im Destillat zu vermindern. Solche vorbekannte Koaleszenzorgane können jedoch weiterhin ein mehr oder weniger stark ölhaltiges Öl-Wasser-Gemisch nicht vermeiden. Zwar schwimmt der Anteil freien Öls im Destillat auf und kann abgeschöpft werden, - das verbleibende Destillat kann jedoch eine vergleichsweise stabile Öl-Wasser-Emulsion darstellen.

Aus der WO 92/03203 A ist bereits eine Vorrichtung zum Reinigen und Trennen von emulgierten Flüssigkeiten und insbesondere von Kühl- und Schmierölemulsionen bekannt, bei der die emulgierten Flüssigkeiten in einem Auffangbecken bis zum Siedepunkt der zu destillierenden Flüssigkeit erhitzt werden und bei der die Dämpfe, die auf einer ersten Seite eines Wärmetauschers und im Auffangbecken erzeugt werden, in einem Kompressor verdichtet werden, wodurch die Temperatur erhöht wird. Dabei werden die so erhitzten Dämpfe mit Hilfe des Kompressors auf die zweite Seite des Wärmetauschers geleitet, auf der sie abgekühlt und kondensiert werden und auf der die durch die Kondensation frei werdende Wärme auf die emulgierte Flüssigkeit auf der ersten Seite des Wärmetauschers übertragen wird, so dass die zu destillierende Flüssigkeit verdampft. Die Temperaturdifferenz zwischen der Verdampfung und der Kondensation wird mit Hilfe von Regelorganen innerhalb eines engen Temperaturbereichs von ungefähr 0,5 bis 6 Grad Celsius gehalten wird. Dabei wird das innerhalb eines engen Temperaturbereichs gehaltene Temperaturniveau der emulgierten Flüssigkeit nur durch Regelorgane geregelt, die aus einem Thermostat in Verbindung mit einem Druckschalter gebildet werden, wobei das Thermostat mit einer mit dem gewünschten Destillat identischen Flüssigkeit gefüllt wird und wobei der Druckschalter mit einem Balg versehen wird, der in Kontakt mit der Atmosphäre steht, so dass Veränderungen im Atmosphärendruck automatisch ausgeglichen werden.

Es besteht nun die Aufgabe, eine Aufbereitungsvorrichtung der eingangs erwähnten Art zu schaffen, mit welcher auch die gesetzlich vorgegebenen Abwasser-Grenzwerte deutlich unterschritten werden können.

Die erfindungsgemäße Lösung dieser Aufgabe besteht bei der Aufbereitungsvorrichtung der eingangs erwähnten Art insbesondere darin, dass der Trennapparat und die Kondensat-Seite des im Verdampfer befindlichen Rohrbündel-Wärmetauschers angeordnet und über einen Überlauf umlenkungsfrei miteinander verbunden sind, dass im Betrieb der Flüssigkeitspegel mit einer Niveauregulierung so geregelt werden kann, dass der Flüssigkeitspegel im Trennapparat einerseits und im Verdampfer andererseits in gleicher Höhe ineinander übergehenden, und dass dem Trennapparat eine Niveauregulierung zugeordnet ist, die bei Unterschreiten eines Flüssigkeitspegels ein Druckentlastungsventil öffnet und die bei Überschreiten eines Flüssigkeitspegels das Druckentlastungsventil schließt.

Bei der erfindungsgemäßen Aufbereitungsvorrichtung sind der Trennapparat und der im Verdampfer befindliche Rohrbündel-Wärmetauscher über einen Überlauf umlenkungsfrei und mit in gleicher Höhe ineinander übergehenden Flüssigkeitspegeln miteinander verbunden. Da das am Austritt des Rohrbündel-Wärmetauschers anfallende und aus einer Wasserphase sowie einer aufschwimmenden organischen Phase, z.B. Öl, bestehende Kondensat praktisch umlenkungsfrei und übergangslos über den Überlauf in den Trennapparat weitergeleitet wird, wird eine Vermischung dieser beiden Phasen vermieden, die ansonsten der Bildung einer stabilen Emulsion und/oder Dispersion Vorschub leisten würde. Im Trennapparat kann somit die aufschwimmende organische Phase aus dem Kondensat gesammelt werden, damit diese Phase durch das Vakuum anschließend wieder zurück in den Verdampfer abgesaugt werden kann. Darüber hinaus lässt sich das Dampfgemisch vom Rohrbündel-Wärmetauscher auf einen zusätzlichen weiteren Rekuperator oder dergleichen Wärmetauscher führen und soweit abkühlen, dass sowohl das Wasser als auch die leicht flüchtigen Lösemittel sowie die im Dampf gelöste Organik kondensiert und separat ausgeschleust bzw. in den Verdampfersumpf zurückgesaugt werden kann. Dadurch lassen sich deutlich bessere Destillatqualitäten erreichen.

Die vom Verdampfer kommenden Inertgase sowie nicht-kondensierte, leicht-flüchtige Dämpfe können im Trennapparat zu einer unerwünschten Druckerhöhung führen. Bei einem erhöhten Druck besteht jedoch die Gefahr, dass die auf dem Destillat aufschwimmenden organischen Flüssigkeitsbestandteile sich mit der übrigen Flüssigkeit erneut zu einer Emulsion, Dispersion oder Suspension verbinden. Über die im Trennapparat vorgesehene Niveauregulierung wird jedoch ein übermäßiger Druckanstieg im Trennapparat vermieden; durch das im Trennapparat und im Verdampfer sich ansammelnde Inertgas wird der Flüssigkeitspegel nach unten gedrückt. Bei Unterschreiten eines Flüssigkeitspegels in Folge des im Trennapparat ansteigenden Gasdruckes wird ein gegebenenfalls auch federbelastetes Druckentlastungsventil geöffnet, welches sich erst bei Überschreiten eines ebenfalls festgelegten Flüssigkeitspegels wieder schließt. Da mittels dieser im Trennapparat vorgesehenen Niveauregulierung druckkonstante Prozessverhältnisse sowohl im Verdampfer als auch in dem mit ihm verbundenen Trennapparat geschaffen werden, wird die angestrebte strömungsberuhigte Konstruktion der erfindungsgemäßen Aufbereitungsvorrichtung wesentlich begünstigt.

Eine bevorzugte Ausführungsform, die eine Aufbereitungsvorrichtung mit einem Verdichter betrifft, der den vom Verdampfer kommenden Reindampf verdichtet, sieht vor, dass der Verdichter den vom Verdampfer kommenden Reindampf etwa auf atmosphärischen Druck verdichtet. Da bei diesem Lösungsvorschlag der Reindampf nicht übermäßig, sondern nur etwa auf atmosphärischen Druck verdichtet wird, bevor er beispielsweise in einem Rohrbündel-Wärmetauscher kondensieren kann, wird der Bildung stabiler Öl-Dampfgemische entgegengewirkt.
Die vorliegende Erfindung lässt sich auch bei einem Wärmepumpenverdampfer verwirklichen. Bevorzugt wird jedoch eine Ausführungsform, bei welcher der Verdampfer zur Verdampfung mittels mechanischer Brüdenverdichtung bestimmt ist.

Nach einer Weiterbildung gemäß der Erfindung, die ebenfalls eine Aufbereitungsvorrichtung mit einem Verdichter betrifft, der den vom Verdampfer kommenden Reindampf verdichtet, ist vorgesehen, dass in der Saug- und/oder Druckleitung des Verdichters ein Temperatursensor angeordnet ist, dass in der Saugleitung des Verdichters eine vom Trennapparat kommende Destillatleitung mündet, in die ein Steuerventil zwischengeschaltet ist, und dass das Steuerventil zur Kühlung des Verdichters derart mit dem Temperatursensor in Steuerverbindung steht, dass das Steuerventil in Abhängigkeit von der vom Temperatursensor erfassten Temperatur öffnet oder schließt. Dabei bildet der Temperatursensor und das Steuerventil einen Regelkreis, der die für den Brüdenverdichter erforderliche Kühlung durch kontinuierliche Einspritzung von Destillat bewirkt.

Dabei ist es besonders vorteilhaft, wenn das Ventil ein in Abhängigkeit von der vom Temperatursensor erfassten Temperatur öffenbares Proportionalventil ist, um damit konstante Prozessverhältnisse zu schaffen, die der Bildung einer Emulsion, Dispersion oder Suspension entgegenwirken.

Eine weitere vorteilhafte Ausführung gemäß der Erfindung, die eine Aufbereitungsvorrichtung mit einem Verdampfer betrifft, in dem ein Rohrbündel-Wärmetauscher vorgesehen ist, dessen Reindestillat-Seite mit einem Trennapparat zum Trennen des Destillats von aufschwimmender organischer Phase oder dergleichen freien Flüssigkeitsbestandteilen verbunden ist, sieht vor, dass dem Trennapparat eine Niveauregulierung zugeordnet ist, die bei Unterschreiten eines Flüssigkeitspegels ein Druckentlastungsventil öffnet und die bei Überschreiten eines Flüssigkeitspegels das Druckentlastungsventil schließt. Die vom Verdampfer kommenden Inertgase sowie nicht-kondensierte, leicht-flüchtige Dämpfe können im Trennapparat zu einer unerwünschten Druckerhöhung führen. Bei einem erhöhten Druck besteht jedoch die Gefahr, dass die auf dem Destillat aufschwimmenden organischen Flüssigkeitsbestandteile sich mit der übrigen Flüssigkeit erneut zu einer Emulsion, Dispersion oder Suspension verbinden. Über eine im Trennapparat vorgesehene Niveauregulierung wird ein übermäßiger Druckanstieg im Trennapparat vermieden; durch das im Trennapparat und im Verdampfer ansammelnde Inertgas wird der Flüssigkeitspegel nach unten gedrückt. Bei Unterschreiten eines Flüssigkeitspegels in Folge des im Trennapparat ansteigenden Gasdruckes wird ein gegebenenfalls auch federbelastetes Druckentlastungsventil geöffnet, welches sich erst bei Überschreiten eines ebenfalls festgelegten Flüssigkeitspegels wieder schließt. Da mittels dieser im Trennapparat vorgesehenen Niveauregulierung druckkonstante Prozessverhältnisse sowohl im Verdampfer als auch in dem mit ihm verbundenen Trennapparat geschaffen werden, wird die angestrebte strömungsberuhigte Konstruktion der erfindungsgemäßen Aufbereitungsvorrichtung wesentlich begünstigt.

Dabei ist es besonders vorteilhaft, wenn das Druckentlastungsventil in eine vorzugsweise vom Verdampfer kommende Druckentlastungsleitung zwischengeschaltet ist. Durch Öffnen des in die Druckentlastungsleitung zwischengeschalteten Druckentlastungsventils kann ein im Trennapparat sowie im Verdampfer herrschender Überdruck über den Verdampfer abgeführt und der Druck in der erfindungsgemäßen Aufbereitungsvorrichtung konstant gehalten werden.

Um die im Trennapparat sowie im Verdampfer angesammelten Gasanteile bei einem entsprechenden Druckanstieg abführen zu können, ist es zweckmäßig, wenn die zum Druckentlastungsventil führende Einlassöffnung im Rohrbündel-Wärmetauscher des Verdampfers oberhalb des oberen Flüssigkeitspegels angeordnet ist.

Nach einer bevorzugten Weiterbildung gemäß der Erfindung, die eine Aufbereitungsvorrichtung mit einem Verdampfer betrifft, in dem ein Rohrbündel-Wärmetauscher vorgesehen ist, dessen Reindestillat-Seite mit einem Trennapparat zum Trennen des Destillats von aufschwimmender organischer Phase oder dergleichen freien Flüssigkeitsbestandteilen verbunden ist, ist vorgesehen, dass der Trennapparat über eine Rohrleitung mit der Reindampf-Seite des Rohrbündel-Wärmetauschers und/oder mit dem Verdampfersumpf verbunden ist, und dass die Einlassöffnung dieser Rohrleitung zum Abscheiden aufschwimmender Flüssigkeitsbestandteile mit Abstand unterhalb des oberen maximalen Flüssigkeitspegels angeordnet ist. Somit kann die im Trennapparat aufschwimmende organische Phase über die Rohrleitung dem Verdampfersumpf zugeführt und damit dem Aufbereitungsprozess erneut unterzogen werden, während dass unterhalb der organischen Phase im Trennapparat befindliche Destillat weiteren Anwendungen oder Aufbereitungsschritten zugeführt werden kann.

Eine bevorzugte Ausführungsform gemäß der Erfindung, die eine Aufbereitungsvorrichtung mit einem Verdampfer betrifft, in dem ein Rohrbündel-Wärmetauscher vorgesehen ist, sieht vor, dass dessen Druckentlastungsleitung über einen Rekuperator oder dergleichen Wärmetauscher geführt ist, der zum Abkühlen nicht-kondensierter, leicht flüchtiger Dämpfe mit einer zum Verdampfer führenden Abwasserleitung verbunden ist. Somit können die nicht-kondensierten, leicht-flüchtigen Dampfanteile von dem zum Verdampfer strömenden Prozessabwasser gekühlt werden, während das aufzubereitende Prozessabwasser bis knapp unter die Verdampfungstemperatur erwärmt wird. Somit können auch die leicht-flüchtigen Dampfanteile, wie zum Beispiel Alkohol oder Ammoniak, im Rekuperator kondensiert und ausgeschieden werden. Der Rekuperator begünstigt den geringen Energieverbrauch in der erfindungsgemäßen Aufbereitungsvorrichtung und ermöglicht ein deutliches Unterschreiten der vorgegebenen Abwasser-Grenzwerte.

Um die Kondensatqualität zusätzlich zu verbessern, ist es vorteilhaft, wenn dem Rekuperator oder dergleichen Wärmetauscher zumindest eine Koaleszenzstufe und/oder wenigstens ein Aktivkohlefilter nachgeschaltet ist.

Dabei sieht eine bevorzugte Weiterbildung gemäß der Erfindung vor, dass in der Druckentlastungsleitung, vorzugsweise in dem dem Rekuperator oder dergleichen Wärmetauscher nachgeschalteten Leitungsabschnitt, ein Temperatursensor vorgesehen ist, der bei Überschreiten eines festgelegten Maximalwertes die Ausförderung des im Verdampfer bei der Destillation entstandenen Rückstandes auslöst.

Nachstehend werden die oben genannten Lösungsvorschläge anhand eines bevorzugten Ausführungsbeispieles noch näher beschrieben.

Es zeigt:
- Fig. 1: das Prinzipfließbild einer Aufbereitungsvorrichtung, in der Prozess- oder Industrieabwässer mittels mechanischer Brüdenverdichtung in einem Verdampfer aufbereitet werden können, und
- Fig. 2: den Verdampfer der in Fig. 1 dargestellten Aufbereitungsvorrichtung im Bereich seines Verdampfersumpfes.

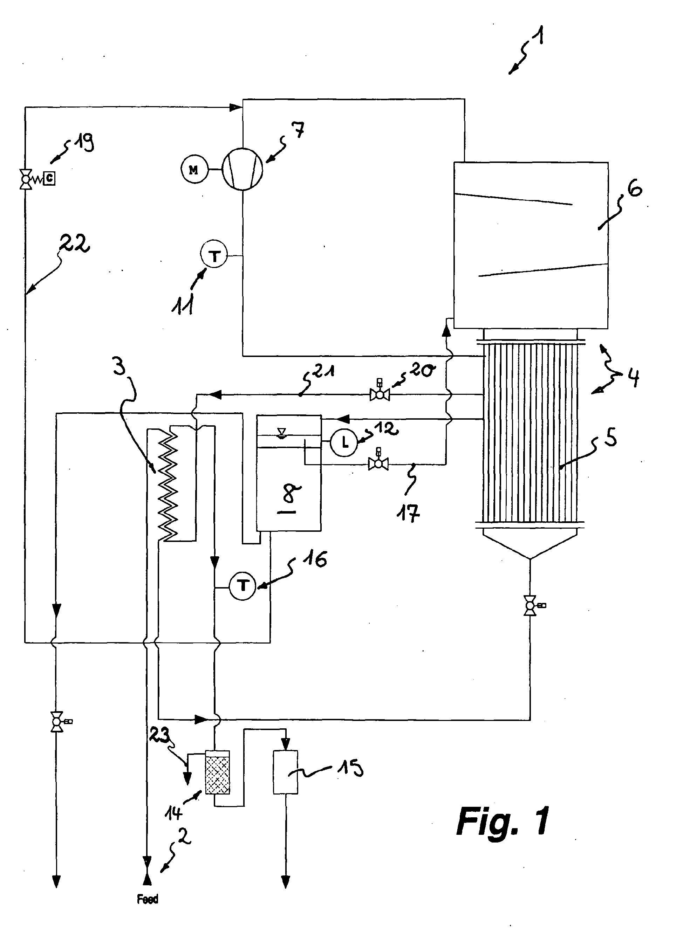

In Fig. 1 sind die wesentlichen Bestandteile einer Verdampferanlage 1 in einem Prinzipfließbild dargestellt. Die in der Verdampferanlage 1 aufzubereitende oder wiederzugewinnende Flüssigkeit wird über einen Abwasser-Eintritt 2 angesaugt und tritt in einen Rekuperator 3 ein, in welchem das aufzubereitende Prozessabwasser die von einem Verdampfer 4 ablaufenden und aus Inertgas sowie nicht-kondensierten, leicht-flüchtigen Stoffen bestehenden Dampfanteile abkühlt und sich dabei bis knapp unter die Verdampfungstemperatur erwärmt.

Von dort wird das Prozessabwasser in den Verdampfer 4 durch das in ihm erzeugte Vakuum gesaugt. Im Verdampfer 4 ist ein vom Reindampf durchströmter Rohrbündel-Wärmetauscher 5 angeordnet, an welchem die Flüssigkeit sich noch mehr erwärmen und verdampfen kann. Dabei bleiben Schmutzpartikel sowie schwerer siedende Flüssigkeiten als Rückstand zurück und werden automatisch über ein Ablassventil abgelassen, sobald eine bestimmte Konzentration erreicht ist.

Der aus dem Prozessabwasser entstandene und von den Schmutzpartikeln sowie den schwerer siedenden Flüssigkeiten befreite Reindampf wird über einen Abscheider 6 von einem Verdichter 7 angesaugt, um mittels des Verdichters 7 von einigen 100 Millibar auf zumindest atmosphärischen Druck verdichtet und dem im Verdampfer 4 befindlichen Rohrbündel-Wärmetauscher 5 zugeführt zu werden. In diesem Kondensator 5 kondensiert der Reindampf und gibt die frei werdende Kondensationsenergie an die die Rohrbündel umgebende Flüssigkeit ab.

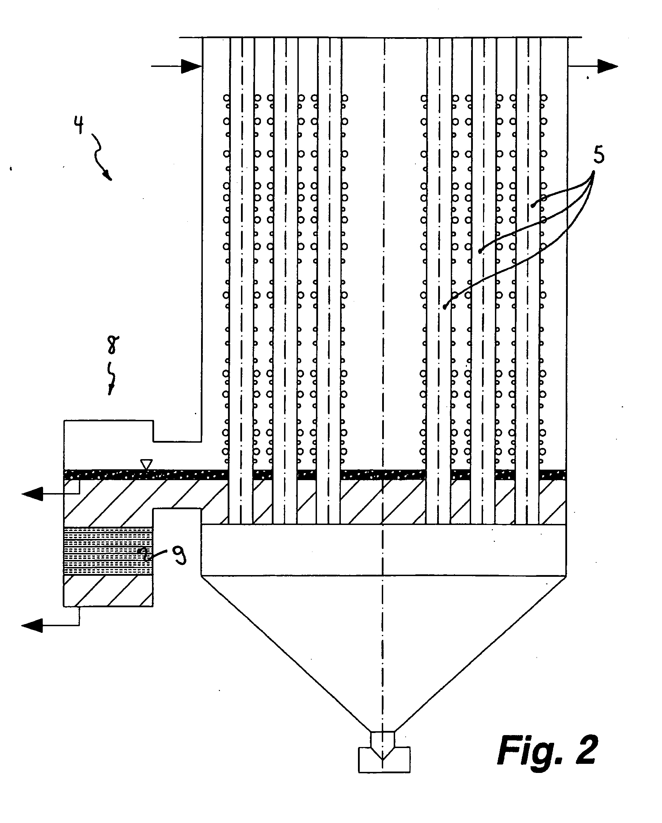

In Fig. 2 ist der Verdampfer 4 sowie der mit ihm verbundene Trennapparat 8 dargestellt. Der Dampf kondensiert im Rohrbündel-Wärmetauscher 5, so dass sich das Destillat im Bodenbereich diese Rohrbündel-Wärmetauschers 5 ansammeln kann; dabei ist der Rohrbündel-Wärmetauscher 5 mit dem Trennapparat 8 derart verbunden, dass die auf dem Destillat aufschwimmende organische Phase vom Destillat getrennt und das Destillat mittels eines im Trennapparat 8 vorgesehenen und beispielsweise aus Steinwolle oder aus einem Edelstahlgestrick bestehenden Koaleszenzorgan 9 von freien Öl-Anteilen zusätzlich weitgehend gereinigt werden kann. Dabei sind der Verdampfer 4 und der Trennapparat 8 derart umlenkungsfrei miteinander verbunden, dass der Flüssigkeitspegel im Trennapparat 8 einerseits und im Verdampfer 4 andererseits in gleicher Höhe ineinander übergehen. Durch diese umlenkungsfreie und somit strömungsberuhigte Verbindung von Verdampfer 4 und Trennapparat 8 wird einer erneuten unerwünschten Vermischung der organischen Phase und der leicht flüchtigen Dämpfe im Kondensat entgegengewirkt.

Ein Teil des im Trennapparat 8 befindlichen Destillats wird zur Kühlung des beispielsweise als Wälzkolbenpumpe ausgebildeten Verdichters 7 verwendet. Dazu ist der Trennapparat 8 über eine, mit einem Proportionalventil 11 versehene Leitung 22 saugseitig mit dem Verdichter 7 verbunden. In der vom Verdichter 7 kommenden Druckleitung ist dazu ein Temperatursensor 11 vorgesehen, der die Verdichtungsendtemperatur erfasst und in Abhängigkeit von der ermittelten Temperatur das Proportionalventil derart öffnet, bis die Verdichtungsendtemperatur auf einen festgelegten Sollwert abgesenkt und konstant gehalten ist.

Da der Aufbereitungsprozess in der Aufbereitungsvorrichtung als geschlossenes System ausgeführt ist, könnte eine zunehmende Anreicherung nicht kondensierter Inertgase und leicht-flüchtiger Dämpfe im Rohrbündel-Wärmetauscher 5 zu einer entsprechenden Druckerhöhung führen. Die während des Aufbereitungsprozesses zunehmende Menge von Inertgas presst das Destillat im Trennapparat 8 unter einen definierten Flüssigkeitspegel. Im Trennapparat 8 ist eine Niveauregulierung 12 vorgesehen, die bei Unterschreiten eines bestimmten Flüssigkeitspegels das in eine zum Verdampfer 4 kommende Druckentlastungsleitung 21 zwischengeschaltete Druckentlastungsventil 20 öffnet, bis dieses Druckentlastungsventil 20 bei Überschreiten eines festgelegten Flüssigkeitsniveaus im Trennapparat 8 wieder geschlossen werden kann. Durch diese niveauregulierte Entlastung des Trennapparats 8 sowie des mit ihm verbundenen Verdampfers 4 wird der unerwünschten Bildung ölhaltiger Emulsionen, Dispersionen oder Suspensionen entgegengewirkt.

Die ausgeschleusten Inertgase sowie die leicht-flüchtigen Dämpfe können über die Druckentlastungsleitung 21 aus dem Verdampfer 4 entweichen und werden im Rekuperator 3 abgekühlt und auskondensiert. Diese können eine stabile Emulsion bilden und zu einer als Ölabscheider dienenden Koaleszenzstufe 14 geführt zu werden, wo die Inertgase über den Gasauslass 23 als Abluft entweichen. Das verbleibende Kondensat wird anschließend durch ein Aktivkohlefilter 15 geleitet, bevor das derart gereinigte Kondensat einer weiteren Verwendung zugeführt oder ins Abwassernetz eingeleitet werden kann.

Da das im Rekuperator 3 gebildete Kondensat im Vergleich zum Destillat größere Mengen an eventuell auch ölhaltigen Schadstoffen pro Volumeneinheit enthält, kann der Verbrauch an Aktivkohle im Aktivkohlefilter 15 wesentlich reduziert werden, da mit dem über das Druckentlastungsventil 21 kommenden Kondensat nur ein hochbelasteter Teilstrom durch die Aktivkohle geleitet wird und die Aktivkohle daher mit einem höheren Schadstoffanteil beladen werden kann. Da dass über die Druckentlastungsleitung 21 kommende Kondensat nur etwa 10 Prozent des Destillat-Volumens ausmacht und da die Aktivkohle mit Hilfe des Kondensats höher beladen werden kann, kann der Aktivkohlefilter 15 vergleichsweise klein und kompakt ausgestaltet werden.

Der während des Aufbereitungsprozesses im Verdampfer 4 als Verdampfersumpf verbleibende Rückstand wird über das bereits oben erwähnte Ablassventil automatisch abgelassen. Um den Zeitpunkt der Ausförderung des Rückstandes in Abhängigkeit von einem Prozessparameter bestimmen zu können, wird die Temperatur des vom Verdampfer 4 kommenden und im Rekuperator 3 abgekühlten Kondensats mittels eines Temperatursensors 16 gemessen, bevor das Kondensat zur weiteren Aufbereitung der Köaleszenzstufe 14 und dem nachfolgenden Aktivkohlefilter 15 zugeführt wird. Die Temperatur dieses Kondensats nimmt nämlich mit der Aufkondensation des im Verdampfer 4 verbliebenen Rückstands zu. Erreicht die Temperatur des Kondensats einen festgelegten Maximalwert, wird die Ausförderung des im Verdampfer 4 verbliebenen Rückstandes durch Öffnen des Auslassventiles ausgelöst.

Ein im Trennapparat 8 eventuell noch aufschwimmender Ölanteil wird dort abgepumpt und entweder in den Verdampfersumpf oder - über die Rohrleitung 17 - in den Abscheider 6 zurückgesaugt, um dort erneut dem Aufbereitungsprozess zugeführt zu werden. Der vom Verdampfer 4 kommende Reindampf wird mittels des Verdichters 7 nur etwa auf Atmosphärendruck verdichtet, wodurch der Bildung einer unerwünschten Öl-Wasser-Emulsion entgegengewirkt wird.

## Patentansprüche

1. Vorrichtung zur Aufbereitung von Prozess- oder Industrieabwässern mit einem Verdampfer (4), der passend ausgeführt ist, um mit Dampf, welcher im Betrieb auf der Heizseite kondensiert, betrieben werden zu können, und somit auch als Kondensator wirkt, und in dem ein Rohrbündel-Wärmetauscher (5) vorgesehen ist, dessen Kondensat-Seite mit einem Trennapparat (8) zum Trennen des Destillats von aufschwimmender organischer Phase oder dergleichen freien Flüssigkeitsbestandteilen verbunden ist, **dadurch gekennzeichnet, dass** der Trennapparat (8) und die Kondensat-Seite des im Verdampfer (4) befindliche Rohrbündel-Wärmetauschers (5) derart angeordnet über einen Überlauf umlenkungsfrei miteinander verbunden sind, dass im Betrieb der Flüssigkeitspegel mit einer Niveauregelung so geregelt werden kann, dass der Flüssigkeitspegel im Trennapparat (8) einerseits und im Verdampfer (4) andererseits in gleicher Höhe ineinander übergehen, und dass dem Trennapparat (8) eine Niveauregulierung (12) zugeordnet ist, die bei Unterschreiten eines Flüssigkeitspegels ein Druckentlastungsventil (20) öffnet und die bei Überschreiten eines Flüssigkeitspegels das Druckentlastungsventil (20) schließt.

2. Vorrichtung nach Anspruch 1, mit einem Verdichter (7), der den vom Verdampfer (4) kommenden Reindampf etwa auf atmosphärischen Druck verdichtet.

3. Vorrichtung nach Anspruch 1 oder 2, **dadurch gekennzeichnet, dass** der Verdampfer (4) zur Verdampfung mittels mechanischer Brüdenverdichtung bestimmt ist.

4. Vorrichtung nach einem der Ansprüche 1 bis 3, **dadurch gekennzeichnet, dass** in der Saug- und/oder Druckleitung des Verdichters (7) ein Temperatursensor (11) angeordnet ist, dass in der Saugleitung des Verdichters (7) eine vom Trennapparat (4) kommende Destillatleitung (22) mündet, in die ein Steuerventil (19) zwischengeschaltet ist, und dass das Steuerventil (19) zur Kühlung des Verdichters (7) derart mit dem Temperatursensor (11) in Steuerverbindung steht, dass das Steuerventil (19) in Abhängigkeit von der vom Temperatursensor (11) erfassten Temperatur öffnet oder schließt.

5. Vorrichtung nach Anspruch 4, **dadurch gekennzeichnet, dass** das Steuerventil (19) ein in Abhängigkeit von der vom Temperatursensor (11) erfassten Temperatur öffenbares Proportionalventil ist.

6. Vorrichtung nach Anspruch 5, **dadurch gekennzeichnet, dass** das Druckentlastungsventil (20) in eine vom Verdampfer (4) kommende Druckentlastungsleitung (21) zwischengeschaltet ist.

7. Vorrichtung nach Anspruch 5 oder 6, **dadurch gekennzeichnet, dass** die zum Druckentlastungsventil (20) führende Einlassöffnung im Verdampfer (4) angeordnet ist.

8. Vorrichtung nach einem der Ansprüche 1 bis 7, **dadurch gekennzeichnet, dass** der Trennapparat (8) über eine Rohrleitung (17) mit dem Verdampfersumpf verbunden ist und dass die Einlassöffnung dieser Rohrleitung zum Abscheiden der organischen Phase oder dergleichen aufschwimmender freier Flüssigkeitsbestandteile mit Abstand unterhalb des oberen maximalen Flüssigkeitspegels angeordnet ist.

9. Vorrichtung nach einem der Ansprüche 1 bis 8, mit einem Verdampfer (4), in dem ein Rohrbündel-Wärmetauscher (5) vorgesehen ist, wobei die mit dem Rohrbündel-Wärmetauscher (5) verbundene Druckentlastungsleitung (21) über einen Rekuperator (3) oder dergleichen Wärmetauscher geführt ist, der zum Abkühlen der Inertgase sowie der nicht-kondensierten, leicht-flüchtigen Dampfanteile mit einer zum Verdampfer (4) führenden Abwasserleitung verbunden ist.

10. Vorrichtung nach Anspruch 9, **dadurch gekennzeichnet, dass** dem Rekuperator (3) oder dergleichen Wärmetauscher zumindest eine Koaleszenzstufe (14) und/oder wenigstens ein Aktivkohlefilter (15) nachgeschaltet ist.

11. Vorrichtung nach Anspruch 9 oder 10**, dadurch gekennzeichnet, dass** in der Druckentlastungsleitung (21), vorzugsweise in dem dem Rekuperator (3) oder dergleichen Wärmetauscher nachgeschalteten Leitungsabschnitt, ein Temperatursensor (16) vorgesehen ist, der bei Überschreiten eines festgelegten Maximalwertes die Ausförderung des im Verdampfer (4) bei der Destillation entstehenden Rückstands auslöst.

## Claims

1. Apparatus for processing process or industrial wastewaters, having an evaporator (4) that is suitably constructed to enable it to be operated by steam which is condensed on the heating side during operation, and thus acts as a condenser, and wherein a tube bundle heat exchanger (5) is provided the condensate side of which is connected to a separating apparatus (8) for separating the distillate from floating organic phase or similar free liquid ingredients, **characterised in that** the separating apparatus (8) and the condensate side of the tube bundle heat exchanger (5) that is located in the evaporator (4) are connected to another, arranged above an overflow without any deflections, such that during operation the liquid level can be regulated by level regulating means in such a way that the liquid level in the separating apparatus (8) on the one hand and in the evaporator (4) on the other hand merge with one another at the same height, and **in that** associated with the separating apparatus (8) is a level regulating apparatus (12) which opens a pressure relief valve (20) when the liquid falls below a set level and closes the pressure relief valve (20) when the liquid exceeds a set level.

2. Apparatus according to claim 1, having a compressor (7) which compresses the pure steam coming from the evaporator (4) roughly to atmospheric pressure.

3. Apparatus according to claim 1 or 2, **characterised in that** the evaporator (4) is designed for evaporation by means of mechanical compaction of vapours.

4. Apparatus according to one of claims 1 to 3, **characterised in that** in the suction and/or pressure line of the compactor (7) is arranged a temperature sensor (11), **in that** a distillate line (22) coming from the separating apparatus (4) opens into the suction line of the compressor (7) and a control valve (19) is interposed in this line (22), and **in that** the control valve (19) for cooling the compressor (7) is operatively connected with the temperature sensor (11) such that the control valve (19) opens or closes as a function of the temperature detected by the temperature sensor (11).

5. Apparatus according to claim 4, **characterised in that** the control valve (19) is a proportional valve that can be opened as a function of the temperature detected by the temperature sensor (11).

6. Apparatus according to claim 5, **characterised in that** the pressure relief valve (20) is interposed in a pressure relief line (21) coming from the evaporator (4).

7. Apparatus according to claim 5 or 6, **characterised in that** the inlet opening leading to the pressure relief valve (20) is arranged in the evaporator (4).

8. Apparatus according to one of claims 1 to 7, **characterised in that** the separating apparatus (8) is connected to the evaporator sump,via a pipeline (17) and **in that** the inlet opening of this pipeline is arranged at a spacing below the upper maximum liquid level for separating the organic phase or similar floating free liquid ingredients.

9. Apparatus according to one of claims 1 to 8, having an evaporator (4) in which a tube bundle heat exchanger (5) is provided, while the pressure relief line (21) connected to the tube bundle heat exchanger (5) is guided via a recovery means (3) or similar heat exchanger which is connected to a waste water pipe leading to the evaporator (4) for cooling the inert gases and the uncondensed highly volatile steam components.

10. Apparatus according to claim 9, **characterised in that** downstream of the recovery means (3) or similar heat exchanger there is at least one coalescence stage (14) and/or at least one active charcoal filter (15).

11. Apparatus according to claim 9 or 10, **characterised in that** in the pressure relief line (21), preferably in the section of the line downstream of the recovery means (3) or the same heat exchanger, there is a temperature sensor (16) which when a fixed maximum value is exceeded triggers the discharge of the residue formed in the evaporator (4) during distillation.

## Revendications

1. Dispositif pour le traitement d'eaux de procédés ou industrielles comprenant un évaporateur (4) qui est réalisé de manière à pouvoir être exploité avec de la vapeur qui se condense en fonctionnement du côté de chauffe, et agit ainsi aussi comme condenseur, et dans lequel est prévu un échangeur de chaleur à faisceau tubulaire (5) dont le côté condensat est relié à un appareil de séparation (8) servant à séparer le distillat de la phase organique venant à flotter ou de composants liquides libres analogues, **caractérisé en ce que** l'appareil de séparation (8) et le côté condensat de l'échangeur de chaleur à faisceau tubulaire (5) se trouvant dans l'évaporateur (4) sont disposés et reliés ensemble sans déviation via un déversoir de telle manière qu'en fonctionnement le niveau de liquide puisse être régulé par une régulation de niveau de façon que le niveau de liquide dans l'appareil de séparation (8) d'une part et dans l'évaporateur (4) d'autre part convergent à même hauteur, et qu'à l'appareil de séparation (8) est associée une régulation de niveau (12) qui, au-dessous d'un niveau de liquide, ouvre une soupape de détente (20) et qui, au-dessus d'un niveau de liquide, ferme la soupape de détente (20).

2. Dispositif selon la revendication 1, comprenant un compresseur (7) qui comprime à peu près à pression atmosphérique la vapeur pure venant de l'évaporateur (4).

3. Dispositif selon la revendication 1 ou 2, **caractérisé en ce que** l'évaporateur (4) est destiné à l'évaporation par compression mécanique de vapeur.

4. Dispositif selon l'une des revendications 1 à 3, **caractérisé en ce qu'**un capteur de température (11) est disposé dans la conduite d'aspiration et/ou de refoulement du compresseur (7), qu'une conduite de distillat (22) venant de l'appareil de séparation (4), dans laquelle est intercalée une soupape de commande (19), débouche dans la conduite d'aspiration du compresseur (7), et que la soupape de commande (19) est en liaison de commande avec le capteur de température (11) de telle manière que la soupape de commande (19) s'ouvre ou se ferme en fonction de la température détectée par le capteur de température (11).

5. Dispositif selon la revendication 4, **caractérisé en ce que** la soupape de commande (19) est une soupape proportionnelle s'ouvrant en fonction de la température détectée par le capteur de température (11).

6. Dispositif selon la revendication 5, **caractérisé en ce que** la soupape de détente (20) est intercalée dans une conduite de détente de pression (21) venant de l'évaporateur (4).

7. Dispositif selon la revendication 5 ou 6, **caractérisé en ce que** l'ouverture d'entrée menant à la soupape de détente (20) est disposée dans l'évaporateur (4).

8. Dispositif selon l'une des revendications 1 à 7, **caractérisé en ce que** l'appareil de séparation (8) est relié au puisard de l'évaporateur par une canalisation (17) et que l'ouverture d'entrée de cette canalisation est disposée à distance sous le niveau de liquide maximal supérieur pour permettre la séparation de la phase organique ou de composants liquides venant à flotter libres analogues.

9. Dispositif selon l'une des revendications 1 à 8, comprenant un évaporateur (4) dans lequel est prévu un échangeur de chaleur à faisceau tubulaire (5), la conduite de détente de pression (21) reliée à l'échangeur de chaleur à faisceau tubulaire (5) passant par un récupérateur (3) ou un échangeur de chaleur analogue qui, pour refroidir les gaz inertes ainsi que les composantes de vapeur hautement volatiles non condensées, est relié à une conduite d'évacuation menant à l'évaporateur (4).

10. Dispositif selon la revendication 9, **caractérisé en ce qu'**au moins un étage de coalescence (14) et/ou au moins un filtre à charbon actif (15) est placé en aval du récupérateur (3) ou de l'échangeur de chaleur analogue.

11. Dispositif selon la revendication 9 ou 10, **caractérisé en ce que** dans la conduite de détente de pression (21), de préférence dans la section de conduite placée après le récupérateur (3) ou l'échangeur de chaleur analogue, il est prévu un capteur de température (16) qui, en cas de dépassement d'une valeur maximale définie, déclenche l'évacuation du résidu formé dans l'évaporateur (4) lors de la distillation.
